# EUROPEAN PATENT APPLICATION

(11) **EP 1 870 628 A1**
(43) Date of publication of application: **26.12.2007**
(21) Application number: 06388044.7
(22) Date of filing: 20.06.2006
(51) Int. Cl.: F16L 59/135

(54) **A pipe insulating unit**

(71) Applicant: Rockwool International A/S, 2640 Hedehusene (DK)
(72) Inventor: Bro, Karsten, 8260 Viby J. (DK); Andersen, Claus Voigt, 2625 Vallensbæk (DK); Primdahl, Søren, 3550 Slangerup (DK); Poulsen, Bo, 2100 Copenhagen Ø (DK); Jensen, Gorm Rosenberg, 4295 Stenlille (DK); Luaridsen, Dan Hvolgaard, 2800 Lyngby (DK)
(74) Representative: Sundien, Thomas

(57) **Abstract**

The present invention relates to an elongated pipe insulating unit (1) comprising superposed first and second insulating material slabs (30, 35), each defining a respective major surface (26, 28), the unit (1) including at the interface between said slabs (30, 35) at least one area (5) for receiving a pipe (10, 12). In accordance with the invention the unit (1) further comprises securing means (40) for securing said first slab (30) to a building part, such as a wall or a ceiling, in a fixed position with the major surface (28) of said first slab (30) being adjacent said building part, the unit (1) further comprising fastening means (15) for securing said second slab (35) to said first slab (30).

## Description

The present invention concerns a pipe insulating unit as defined in the preamble of claim 1. Such units are known but are cumbersome in use, the installation of the pipes in the units and the mounting of the units to a building ceiling or wall being complicated.

The present invention, as defined in the characterizing portion of claim 1, aims at resolving the above-mentioned drawbacks. According to a preferred embodiment the securing means for securing the unit to the building ceiling/wall are also adapted to support the pipes received by the unit. This provides the advantage that sagging of the pipes and, hence, of the unit is reduced as compared to the prior art units.

According to yet another embodiment the securing means are permanently secured to an insulating material slab of the unit by the securing means being received within a cut-out portion of the slab and through the application of glue. The securing means may also be permanently secured by any other suitable securing means.

A method of mounting a pipe insulating unit to a building part, such as a ceiling, is defined in claim 14.

Embodiments of the invention will now be discussed in details with reference to the drawings.
Fig. 1 shows a perspective view of a pipe insulating unit according to the invention, used with two pipes,
Fig. 2 shows a perspective view of the unit of fig. 1 without the lower slab part of the unit and during the process of mounting pipes to the upper slab part of the unit, after mounting of the upper slab to a building part,
Fig. 3 shows a perspective view similar to that of fig. 2, during the step of completion of the unit after mounting of the pipes,
Figs. 4a and 4b show side and top views of a bracket forming part of the unit according to a preferred embodiment,
Fig. 5 shows the step of mounting the pipes to the bracket shown in figs. 4a and 4b,
Fig. 6 shows a perspective view of an alternative unit,
Figs. 7a and 7b show a cross-sectional view of suitable panels for the unit,
Figs. 8a and 8b show a first alternative embodiment of a securing means, and
Figs. 9a and 9b show a second alternative embodiment of a securing means.

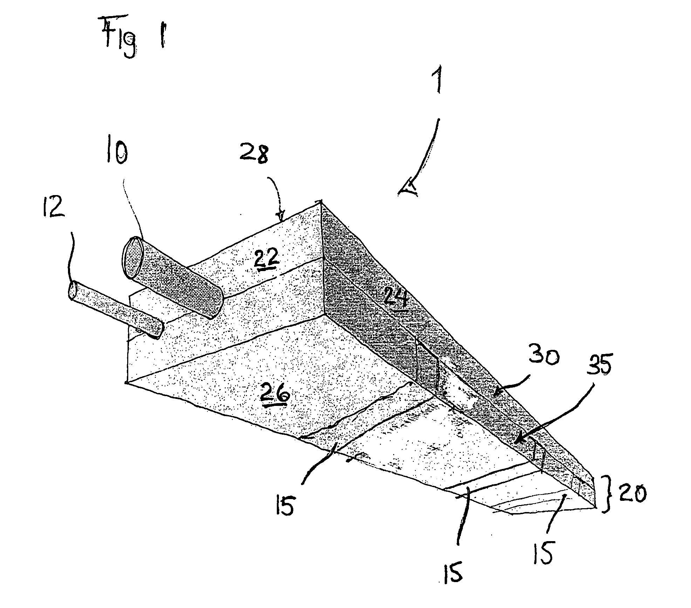

In fig. 1 a pipe insulating unit 1, such as a pipe heat insulating unit, according to the invention is shown, two pipes 10, 12 being supported by the unit 1. The unit 1 includes a insulating block 20 comprising an upper and a lower insulating slab 30, 35, preferably heat insulating slabs 30, 35, the pipes 10, 12 being received within the block 20. The slabs 30, 35 preferably are cut out from a mineral fiber web or from slabs of a foamed material and are held closely together by means of one or more fastening means 15. The pipes 10, 12 preferably form part of a domestic heating system, or of a domestic plumbing system supplying hot tap water.

The insulating block 20 has two opposite end faces 22, of which one is shown in the drawing, and two opposite side faces 24, of which one is shown in the drawing. In addition, the block 20 has a lower major face 26, and an opposite, upper major face 28. All faces of the block 20 are preferably even or essentially even, and are preferably mutually parallel. The faces 22, 24, 26, 28 are preferably defined by the insulating slab material; however, the slabs 30, 35 may be covered by a sheet material, such as plastics, metal foil, paper, etc., to provide any desired finish.

Depending on the installation the pipes 10, 12 may be arranged so as to protrude from the end faces 22, as shown, or the pipes 10, 12 may be arranged with their ends flush with the faces 22. One or both of each pipe 10, 12 may alternatively terminate slightly within the block 1, offset from the end faces 22. Using appropriate connecting devices pipes of an adjacent unit similar to the unit 1 may be connected with the pipes 10, 12.

In use of the pipe insulating unit 1 within a building, the block 20 will be arranged with the upper major face 28 facing a wall or a ceiling (not shown) of the building; in a typical installation, the upper major face 28 defined by the upper slab 30 will be mounted lying flatly against the aforementioned wall or ceiling, a typical thickness of the unit 1 measured between the two major faces 26, 28 being 8-30 cm. When the unit 1 is used as part of a domestic plumbing system a typical thickness of the unit 1 may be 10-16 cm. This is substantially less than when conventional suspended pipes with pipe sections are used. Hence, when the unit 1 is mounted with the upper surface 28 lying against a room ceiling, the distance between intermediate floors of a building may be reduced by eg. 15 cm.

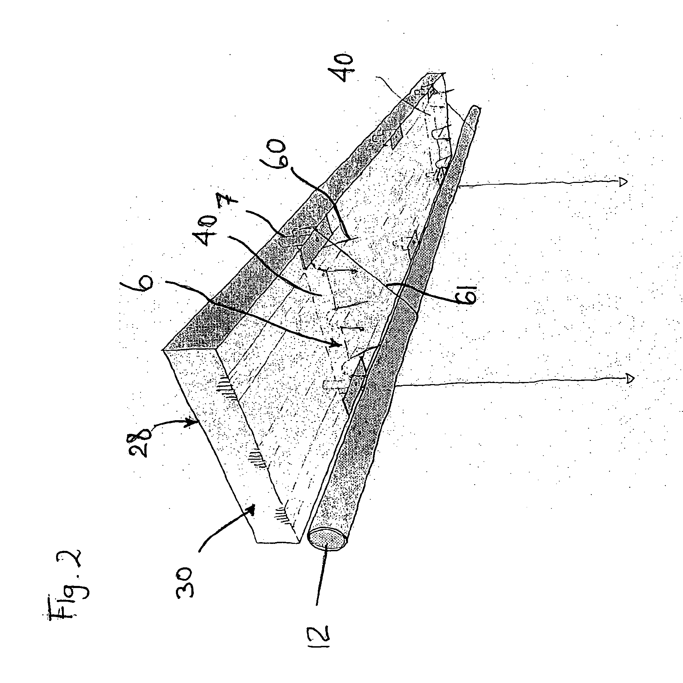

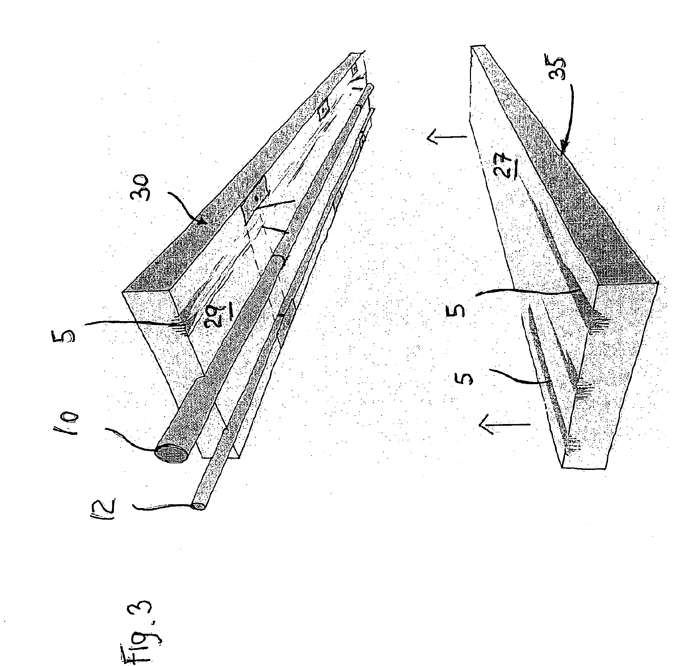

Fig. 2 shows one initial step during installation of the unit 1. In use, the worker will first mount the upper slab 30 using metal or plastics brackets 40 that form part of the unit 1 and that will be described in further detail below. After installation of the slab 30, the upper surface 28 thereof will lie flatly against the building ceiling (not shown). The worker will then mount one or several pipes 10, 12, again using the brackets 40, and apply the lower slab 35 as shown in fig. 3, using connecting device 15. Hence, the weight of the pipes 10, 12 is widely carried by the brackets 40 that also carry the weight of the slabs 30, 35.

As shown in fig. 3 the slabs 30, 35 have even or essentially even faces 27, 29 opposite the aforementioned major faces 26, 28. Elongated areas 5 are formed in the faces 27, 29 for receiving the pipes 10, 12. The elongated areas 5 extend from one end face 22 of the block 20 to the other and may be in the form of semicircular cut-outs sized to receive with a close or relatively close fit a pipe 12 of a given diameter. Alternatively the slabs 30, 35 may have been treated or formed such that the material thereof yields to a greater degree in the areas 5 such that an area 5 may tightly receive pipes 10, 12 of a diameter within a given range. In connection with mineral fiber slabs the slabs may have been mechanically treated, such as through a local compression treatment along areas 5, in order to locally break the fiber bonds established during the curing of the mineral fiber web comprising mineral fibers bonded by a curable binder, thereby making it possible to press the pipes 10, 12 into one or both of the faces 27, 29, thereby allowing a tight assembly of the block 20 using connecting device 15 in such a manner that the interface defining faces 27, 29 abut each other. The adjoining faces 27, 29 define an interface within the unit 1.

Alternatively, the insulating material may be so soft that the pipes 10, 12 can be pressed fully or partly into the material. By forming the slabs 30, 35 such that the mineral fibres extend in a direction perpendicular to the faces 27, 29 in the area 5, it is possible to ensure that the fibres fit snugly around the pipes 10, 12.

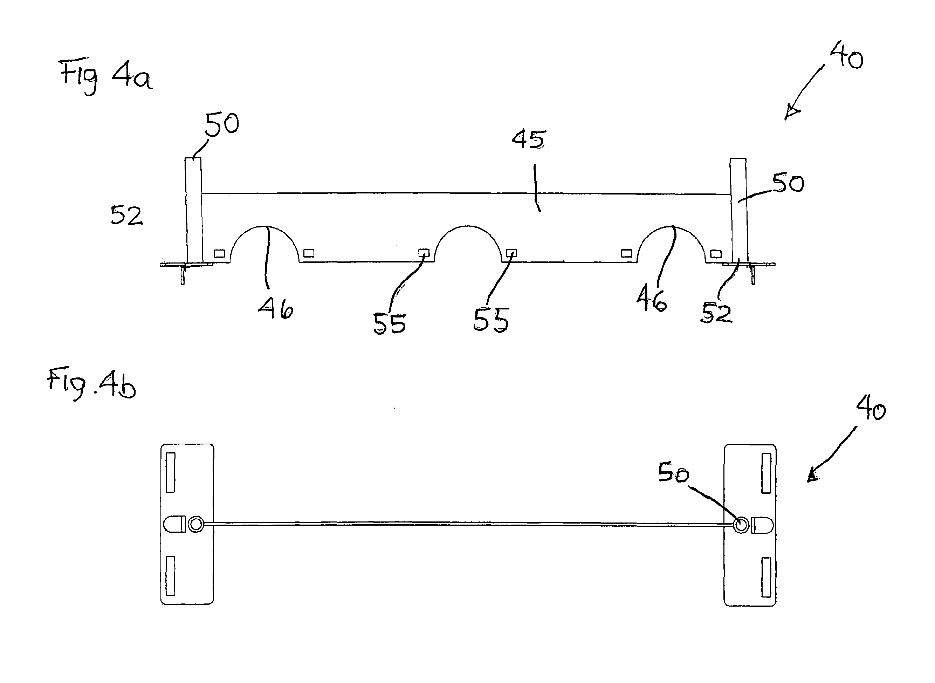

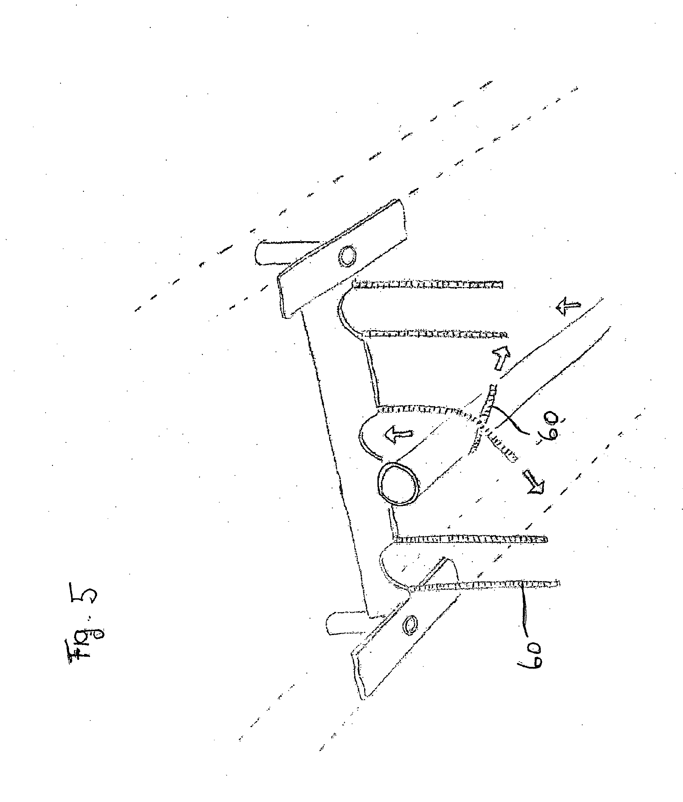

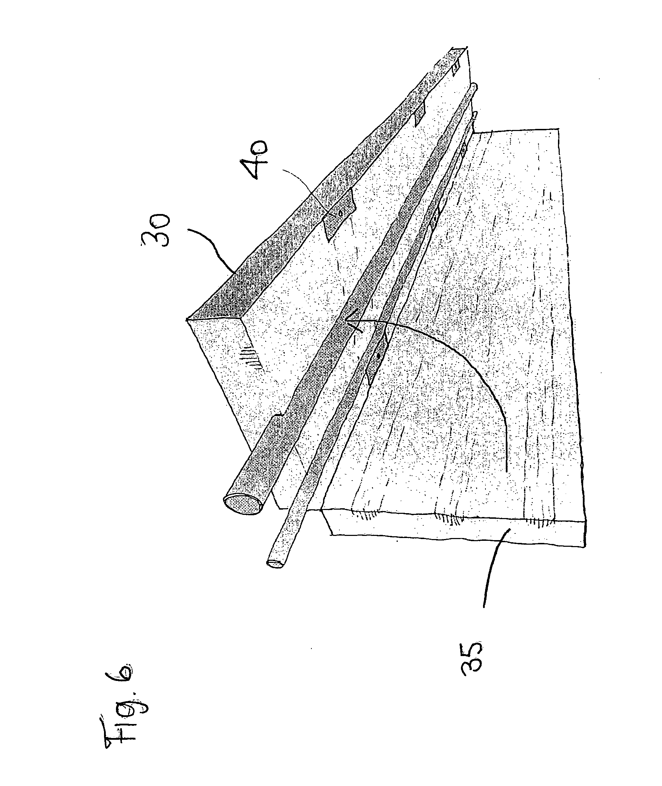

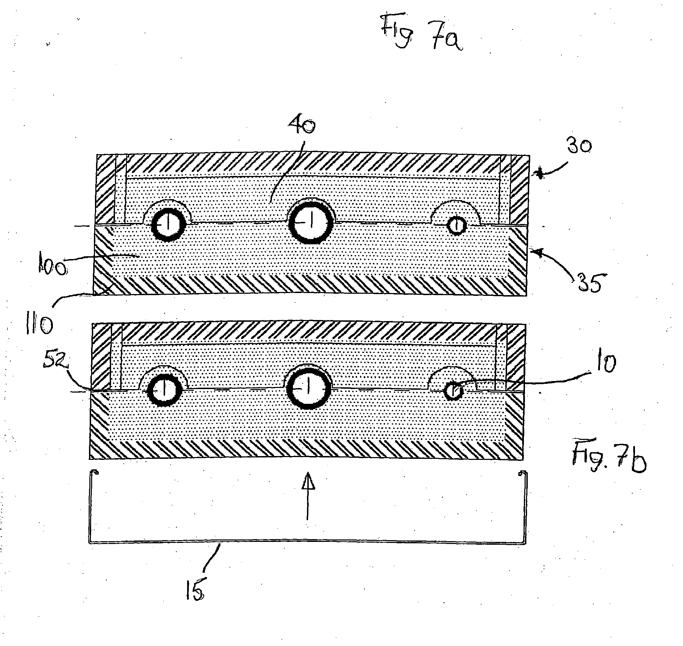

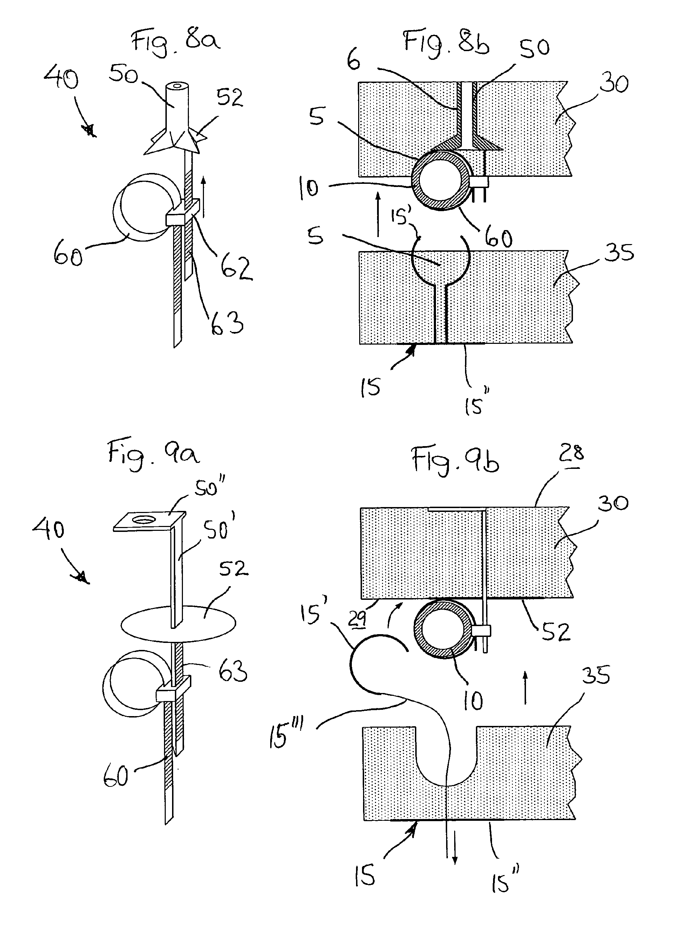

The pipe insulating unit 1 additionally comprises mounting and pipe supporting brackets 40 shown schematically in fig. 2 and in more details by way of example in figs. 4a, 4b and 5. The shown bracket 40 extends across the width of the slabs 30, 35 and is useful for mounting a slab 30 of dimensions 6 cm by 36 cm by 300 cm, the slab 30 being part of a unit 1 for supporting three parallel pipes 10, 12. As shown in fig. 2 brackets 40 may be located at a spacing of eg. 100 cm or at any shorter or greater spacing along the length of the pipes 10, 12.

The bracket 40 comprises a flat main body 45 with a slab support part 52 arranged at each end thereof. A hollow tubular socket 50 open at both ends extends perpendicularly to the slab support parts 52, aligned with a hole formed in the slab support parts 52, and has a length corresponding essentially to the thickness of the slab 30.

When making the pipe insulating unit 1 bracket 40 receiving incisions 6 are made into the lower face 29 of the upper slab 30, to a depth corresponding to the dimensions of the main body 45, eg. corresponding to half the thickness of the slab 30. In addition, through-going holes 7 are drilled or otherwise formed in the slab 30, the holes 7 receiving the tubular sockets 50 of the bracket 40. Hence, when the bracket 40 is correctly inserted, as shown in fig. 2, the slab support parts 52 will bear against the lower face 29 of the slab 30 and will allow the slab 30 to be carried by the bracket 40; alternatively or in addition, the slab 30 may be carried by the bracket 40 through the bracket 40 being secured to the slab 30 by gluing the incision 6, whereby removal or loss of the brackets 40 from the slab 30 is prevented.

During the first step of mounting the unit 1 to a ceiling or any other building structure such as a wall the worker will first place the slab 30 having the bracket 40 against the ceiling and drill holes into the ceiling through the tubular sockets 50. He will then insert any suitable type of anchor into the ceiling through the tubular sockets 50 such that the slab 30 is reliably secured to the building structure in the area of any or all brackets 40.

The bracket 40 main body 45 also has circular cut-outs 46 corresponding to the number of pipes 10, 12 to be supported and determining the location of the pipes 10, 12 when received by the unit 1. The areas 5 of the slabs 30, 35 are provided in accordance with such a pattern that they will be aligned with the circular cut-outs 46 of the bracket mounted to the slab 30. In addition the bracket 40 of the unit 1 comprises pipe supporting means that may be formed as straps 60 as shown in figs. 2 and 5 and used for securing the pipes 10, 12 to the bracket 40, as shown in fig. 3. The straps 60 run through openings 55 formed in the main body 45 and are preferably conventional toothed flexible plastics straps having at one end a locking head receiving the other end and preventing withdrawal of the other end once inserted. A temporary support strap 61 may be provided that allows the worker to proceed from the first step of mounting the unit 1 to a further, optional step as shown in fig. 2 where pipes 10, 12 are mounted in a temporary position, suspended below the slab 30. This will allow the worker to connect the pipe 12 to an aligned pipe of an adjoining unit 1, thus forming a pipe string part of a length corresponding to the number of adjoining units 1. By pulling the temporary support strap 61 the pipe 12 can be raised to a position where it can be secured by the straps 60. In this respect it is noted that adjoining units may be arranged in any suitable manner, either in extension of the unit 1 or at any angle thereto, eg. with the pipes of the adjoining unit running perpendicular to the longitudinal extension of the pipes 10, 12 of the unit 1 shown in fig. 1, thus permitting pipe bends to be formed without compromising the efficient heat insulation provided by the unit according to the invention.

The worker will then proceed to the step of tightening the straps 60 as shown in fig. 5 whereby the pipes 10, 12 become received by the pipe receiving areas 5 of the slab 30, as shown in fig. 3. Subsequently the worker will connect the lower slab 35 to the slab 30 by means of the fastening means 15 formed as a U-shaped bracket that extends across the major surface 26 and that has upright arms engaging the slab support parts 52 of the bracket 40 on either side of the unit 1. The fastening means 15 may be secured to the lower slab 35, or it may be a separate element. It is noted that the slab 35 may alternatively be pivotally pre-connected to the upper slab 30 as shown in fig. 6 through any appropriate connecting device, such as a hinge, the slab 35 being turned to the position shown in fig. 1 and being secured in that position by suitable fastening means in a final mounting step.

The upper and lower insulating slabs 30, 35 are preferably provided with an outer covering that provides strength and rigidity to the slabs 30, 35. The outer covering can be made from any material, such as metal, plastics, wood, foam, etc.

It is noted that the slabs may also be formed as suggested schematically in fig. 7a and 7b. In this embodiment, the slabs would have a central core 100 providing a high degree of heat insulation whilst an outer cover 110 provides an impact resistance to the unit 1. Preferably, the core may be made from a low density mineral fiber web while the outer cover may be made from a higher density mineral fiber web. Fastening means 15 is shown in fig. 7b at the mounting stage before engagement thereof with slab support parts 52 of the bracket 40.

In fig. 4a and 4b the bracket 40 which defines a securing means for securing the slab 30 to the building structure is disclosed as being useful for supporting all pipes received by the unit 1 through the bracket 40 having a yoke-like structure.

It is noted that a plurality of securing means 40 could be used that each connect the slab 30 to the building structure and that each is adapted to carry a single pipe only, as shown by way of example in figs. 8a and 8b and figs. 9a and 9b.

Fig. 8a and 8b show a securing means 40 including an anchor receiving tubular socket 50 and a slab supporting part 52 with a toothed flexible strap 60 defining a supporting means for supporting a pipe 10. A toothed flexible strap 63 connected to the socket 50 engages a locking head 62 to which the flexible strap 60 is connected. The locking head 62 is also adapted to lockingly engage with a free end of the toothed flexible strap 60. When installing a unit 1 according to the invention a worker inserts the socket 50 into the slab through a pre-drilled hole 6. Alternatively, depending on the material of the slab 30 and the design of the socket 50, a hole 6 is formed in the material of the slab 30 on insertion of the socket 50. The worker then secures the socket 50 to the building using any suitable anchor, such as a screw. A pipe 10 is then supported by folding the strap 60 around the pipe 10 and inserting the free end thereof through a strap 60 receiving opening in the locking head 62 and the position of the locking head 62 and pipe 10 in relation to the socket 50 is then adjusted in an upward direction, opposite movement being restricted by the teeth of the strap 63. The locking head 62 may provide an additional support for the upper slab 30. As shown in fig. 8b, after having tightened the strap 60 around the pipe 10 the worker will apply the lower slab 35 in order to secure the lower slab 35 to the upper slab 30. Suitable fastening means 15 for holding the lower slab closely against the upper slab 30 may be formed as a bracket 15 having a portion 15" engaging the lower face 26 of the lower slab 35, and having a hook-like portion 15' run through an incision formed in the lower slab 35 engaging the pipe 10, as shown in fig. 8b, such that the lower slab 35 is carried through the bracket 15 engaging the socket 50.

Alternatively, as shown in fig. 9a the securing means 40 may include a head portion 50" that has a through-going opening for receiving an anchor and that has a leg portion 50' adapted to extend through the slab 30. The leg portion 50' is run through the upper slab 30 in direction from the upper surface 28 thereof and has a toothed stem 63 engaging a slab supporting part 52 in the same manner as the locking head 62 engages the strap 63 discussed in relation to fig. 8a. To install the slab 30 the worker will first mount the head portion 50" to the building part, then press the slab 30 against the leg portion 50' such that the leg portion 50' penetrates the slab 30. He will then mount the slab supporting part 52 on the toothed stem 63 such that the former engages the lower surface 29 thereof and holds the upper slab 30 against the building. A fastening means 15 includes a head portion 15" and a hook portion 15' with a flexible strap 15"' connected thereto. After the worker has tightened a toothed strap 60 around the pipe 10, as described in relation to fig. 8a above, the hook portion 15' is placed on the pipe 10 and the flexible strap 15"' is run through the lower slab 35 and connected to the head portion 15", such as through the flexible portion 15"' being toothed and through the head portion 15" having locking means engaging the teeth of the flexible portion 15"'.

It will be understood that the pipe insulating unit 1 according to the invention may advantageously find use where pipes would otherwise as is conventional first be suspended from the ceiling by means of individual pipe suspension, and where the builder would subsequently wrap a tubular sheathing around the pipe, as taught by way of example in W09637728. Since when using a tubular sheathing a certain minimum clearance is required between the pipe and the ceiling for the worker to place the sheathing around the pipe the present invention may allow for the pipes 10, 12 to be placed closer to the ceiling or building wall as the case may be, the distance between the pipe or ceiling wall being decided by the thickness of the upper insulating slab 30 required for obtaining a specified maximum heat loss. Hence, the distance between intermediate floors of a building can be reduced.

## Claims

1. An elongated pipe insulating unit (1) comprising superposed first and second insulating material slabs (30, 35), each defining a respective major surface (26, 28), the unit (1) including at the interface between said slabs (30, 35) at least one area (5) for receiving a pipe (10, 12),
**characterised in** the unit (1) further comprising securing means (40) for securing said first slab (30) to a building part, such as a wall or a ceiling, in a fixed position with the major surface (28) of said first slab (30) being adjacent said building part, and **in that** the unit (1) further comprises fastening means (15) for securing said second slab (35) to said first slab (30).

2. An elongated pipe insulating unit (1) according to the preceding claim, said securing means (40) including supporting means (60) for supporting said pipes (10, 12).

3. An elongated pipe insulating unit (1) according to the preceding claim, said supporting means being straps (60).

4. An elongated pipe insulating unit (1) according to claim 2 or 3, including temporary pipe support means (61), such as straps.

5. An elongated pipe insulating unit (1) according to claim 2 or 3 or 4, said securing means being formed as a bracket (40) extending across a width of said first slab (30) and including a body portion (45) having connected thereto said supporting means (60).

6. An elongated pipe insulating unit (1) according to any of the preceding claims, said securing means (40) being received within recesses or incisions (6) formed in said first slab (30) and extending from the face (29) thereof opposite said major surface (28).

7. An elongated pipe insulating unit (1) according the any of the preceding claims, said securing means (40) including a tubular socket (50) extending through said first slab (30) and being adapted to receive anchoring means, such as screws, engageable with said building part.

8. An elongated pipe insulating unit (1) according to any of the preceding claims, said securing means (40) being provided with at least one slab support part (52).

9. An elongated pipe insulating unit (1) according the any of the preceding claims, said at least one area (5) being formed as an elongated recess.

10. An elongated pipe insulating unit (1) according the any of the preceding claims 1-8, at least one of said slabs (30, 35) being soft in said at least one area (5) to receive at least partly said pipe (10, 12).

11. An elongated pipe insulating unit (1) according to any of the preceding claims, said slab (30, 35) being a mineral wool slab, at least some of the fiber bonds provided by a mineral fiber binder in said area (5) having been broken.

12. An elongated pipe insulating unit (1) according to any of the preceding claims, at least one of said slabs (30, 35) being a mineral wool slab having in said at least one area (5) fibres arranged perpendicular to said interface.

13. An elongated pipe insulating unit (1) according to any of the preceding claims, said second slab (35) being hinged to said first slab (30).

14. A method of mounting onto a building part, such as a wall or ceiling, an elongated pipe insulating unit (1) comprising superposed first and second insulating material slabs (30, 35), each defining a respective major surface (26, 28), the unit (1) including at the interface between said slabs (30, 35) at least one area (5) for receiving a pipe (10, 12),
**characterised in** first securing using securing means (40) said first slab (30) to said building part with the major surface (28) of said first slab (30) being adjacent said building part, then securing at least one pipe (10, 12) in a position wherein the pipe (10, 12) is received by a corresponding area (5) using supporting means (60) connected to said securing means (40), and then securing said second slab (35) to said first slab (30).

15. A method according to the preceding claim, wherein said pipe(s) (10, 12) are temporarily secured in a position suspended from said securing means (40) at a distance from said first slab (30), prior to said step wherein said pipe(s) is/are received by said corresponding area (5).

16. A method according to claim 14 or 15, said securing means (40) including a tubular socket (50) extending through said first slab (30) from a surface (29) of said first slab (30) opposite said first major surface (28), wherein anchor means, such as a screw, is inserted into said socket (50) and into said building part to thereby secure said first slab (30) to said building part.
